# EUROPEAN PATENT APPLICATION

(11) **EP 4 806 552 A1**
(43) Date of publication of application: **16.09.2026**
(21) Application number: 23958167.1
(22) Date of filing: 25.12.2023
(51) Int. Cl.: B01J 27/051, B01J 31/20, B01J 37/02

(54) **HYDROGENATION CATALYST, PREPARATION METHOD THEREFOR AND USE THEREOF, AND OIL PRODUCT HYDROTREATING METHOD**

(30) Priority: 10.11.2023 CN 202311494166
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: JIANG, Shujiao, Dalian, Liaoning 116045 (CN); DING, Sijia, Dalian, Liaoning 116045 (CN); YUAN, Shenghua, Dalian, Liaoning 116045 (CN); GENG, Xinguo, Dalian, Liaoning 116045 (CN); YANG, Gang, Dalian, Liaoning 116045 (CN); ZHANG, Cheng, Dalian, Liaoning 116045 (CN); SUI, Baokuan, Dalian, Liaoning 116045 (CN)
(74) Representative: karo IP
(86) International application number: PCT/CN2023/141447
(87) International publication number: WO 2025/097569

(57) **Abstract**

A hydrogenation catalyst and a preparation method therefor, the hydrogenation catalyst comprising a support and an active component, the active component comprising Mo and a divalent metal, and the divalent metal being at least one selected from Mg, Zn, and Cu; based on the total weight of the hydrogenation catalyst, the content of Mo is 3-18%, the content of the divalent metal is 0.1-7%, and the mass ratio of Mo to S is 1.5 or more. The catalyst has good hydrotreating capacity, has good hydrotreating activity when used for oil product hydrotreating in a low-sulphur environment, and also has good activity stability. Also provided are a use of the hydrogenation catalyst and an oil product hydrotreating method.

## Description

### CROSS-REFERENCE TO RELATED APPLICATIONS

The application claims the benefit of the China patent application No. "202311494166.9", filed on November 10, 2023, the content of which is specifically and entirely incorporated herein by reference.

### TECHNICAL FIELD

The invention belongs to the technical field of hydrogenation catalysts, and relates to a hydrogenation catalyst, a preparation method therefor and a use thereof, and an oil product hydrotreating method.

### BACKGROUND ART

The hydrogenation catalysts currently used in the petrochemical industry adopt an active phase, which uses Mo(W)S₂ as a main body, and its outer layer is decorated with Ni or Co nano-scale cluster. The active phase is characterized by high requirements on the sulfur content in the feedstock to be processed and the sulfur content in the reaction atmosphere. When sulfur content in the feedstock is low, hydrogen sulfide in the reaction system is insufficient to maintain stable structure of the active phase, the active phase will be reduced by hydrogen gas, resulting in a decreased reactivity.

In order to adapt with the low sulfur feedstock, the researchers have proposed various methods of maintaining sulfur stability in the active phase.

CN1488729A discloses a fractional oil two-stage hydrogenation dearomatizing process and method. It adopts a two-stage hydrogenation process, and the reactors of said two stages adopt a non-noble metal catalyst, a switching pipeline is arranged between an inlet and an outlet of reactor of every stage, when the activity of catalyst of second stage reactor is reduced, the switching operation is made, the original second reactor can be used as a first reactor, the original first reactor can be used as a second reactor. The process solves the problem that the second-stage catalyst in the fractional oil two-stage hydrogenation process with non-noble metal catalyst is prone to deactivation, prolongs the operating cycle of the catalyst.

CN102465014A discloses a hydrocracking method for processing a low-sulfur raw material. The method comprises the following steps: hydroprocessing a high-sulfur raw material, and performing gas-liquid separation on a reaction effluent to obtain sulfur-containing hydrogen-enriched gas; hydrocracking low-sulfur raw oil, and performing gas-liquid separation on a reaction effluent to obtain a low-sulfur hydrogen-enriched gas; and mixing the sulfur-containing hydrogen-enriched gas and the low-sulfur hydrogen-enriched gas, selectively performing hydrogen sulfide removal treatment on the gas mixture, and circulating the treated gas mixture to a reactor inlet. According to the invention, two paths of hydrogen-enriched gas of the hydroprocessing process and the hydrocracking process are effectively combined, and the sulfur-containing hydrogen-enriched gas subjected to hydroprocessing is fully utilized to replenish sulfur for a low-sulfur raw material hydrocracking device, so that the problem of sulfur loss of the catalyst during long-term operation of the low-sulfur hydrocracking device is effectively solved.

CN105749933B discloses a preparation method of a hydrogenation catalyst. The hydrogenation catalyst comprises a support and an active metal component supported on the support, the active metal component is bilayer distributed along a radial direction of the support, the active metal component of a core layer being NiO and WO₃, and the active metal component of a shell layer is MoO₃ and NiO and/or CoO, the method comprising the following steps: impregnating a hydrothermally treated support in an acidic solution containing a molybdenum compound and a nickel compound and/or a cobalt compound and drying to obtain a support; impregnating the support in an alkaline solution containing a nickel compound and a tungsten compound, followed by drying and calcination to obtain a catalyst. The catalyst uses a layered distribution of the active metal component on the support to enhance activity of the catalyst for hydrodesulfurization, removing residual carbon and denitrogenation, but the catalyst still has a disadvantage of poor stability for processing a low sulfur raw material.

### SUMMARY OF THE INVENTION

In order to overcome the deficiencies of the prior art, the present invention provides a hydrogenation catalyst, a preparation method therefor and a use thereof, and an oil product hydrotreating method. The catalyst provided by the invention has good hydrotreating capacity, especially for oil product hydrotreating in low-sulphur environments, the catalyst not only has good hydrotreating activity, but also exhibits desirable activity stability, thus the catalyst is especially suitable for processing the tail oil derived from hydrogenation of ebullated bed residual oil.

The first aspect of the present invention provides a hydrogenation catalyst comprising a support and an active component, the active component comprises Mo and a divalent metal, and the divalent metal is at least one selected from the group consisting of Mg, Zn and Cu; based on the total weight of the hydrogenation catalyst, the content of Mo is within the range of 3-18%, the content of the divalent metal is within the range of 0.1-7%, and the mass ratio of Mo to S is 1.5 or more.

Preferably, Mo comprises +2 valence Mo, 0 valence Mo, and +4 valence Mo in the catalyst tested by X-ray Photoelectron Spectroscopy (XPS); further preferably, +2 valence Mo is contained in an amount of 50-75%, 0 valence Mo is contained in an amount of 10-32%, +4 valence Mo is contained in an amount of 1-25%, based on the total amount of Mo calculated in terms of atoms.

The second aspect of the present invention provides a method for preparing a hydrogenation catalyst, the method comprises the following steps:
(1) Introducing molybdenum hexacarbonyl and an organic divalent metal compound into a support through an impregnation method to obtain a catalyst precursor I, wherein the divalent metal is at least one selected from the group consisting of Mg, Zn and Cu;
(2) Contacting a dispersant with the catalyst precursor I in the presence of an inert gas to obtain a catalyst precursor II;

The method further comprise step (3-1) or step (3-2), wherein,
Step (3-1) comprises: vulcanizing the catalyst precursor II, the vulcanizing process causes that the hydrogenation catalyst has a mass ratio of Mo to S being 1.5 or more, preferably within the range of 1.5-3;
Step (3-2) comprises: impregnating the catalyst precursor II with an impregnation liquid containing a polysulfide, and then subjecting to drying.

The third aspect of the present invention provides the hydrogenation catalyst prepared with the method according to the second aspect.

The fourth aspect of the present invention provides an use of the hydrogenation catalyst according to the first aspect or the third aspect in an oil product hydrotreating.

The fifth aspect of the present invention provides an oil product hydrotreating method, the method comprising: contacting an oil product with the hydrogenation catalyst according to the first aspect or the third aspect and carrying out the reaction under the hydrotreating conditions.

Preferably, the method comprises: contacting an oil product with at least one hydrogenation decarbonization catalyst and at least one hydrogenation decarbonization catalyst and carrying out the reaction under the hydrotreating conditions, wherein the hydrodecarbonization catalyst and the hydrogenation decarbonization catalyst are each independently a hydrogenation catalyst according to the first aspect or the third aspect, wherein the divalent metal in said hydrodecarbonization catalyst is Mg, and the divalent metal in said hydrogenation decarbonization catalyst is Cu and/or Zn.

Preferably, the method uses a fixed bed hydrogenation process, the hydrodecarbonization catalyst is disposed upstream the hydrogenation decarbonization catalyst in the flow direction of materials.

The present invention has the following advantages over the prior art:
1. In the conventional hydrogenation catalysts, the active metal is typically Mo and Ni (Co), wherein the active phase is mainly MoS₂ (+4 valence Mo), and Ni (Co) is distributed around MoS₂. The present inventors have discovered through researches that the active component is formed by complexing Mo with a divalent metal (at least one of Mg, Zn and Cu), and the mass ratio of Mo to S in the catalyst is controlled within a certain range, such that Mo is complexed with the divalent metal (at least one of Mg, Zn and Cu) and S to form a metal active phase, which is conducive for enhancing the hydrotreating capacity of the catalyst and preventing the loss of sulfur from the active phase under a low-sulfur reaction environment. The present inventors have found through further studies that the hydrotreating capacity of the catalyst can be further enhanced by controlling the ratio of Mo with different valence states in the metal active phase, and particularly the +2 valence Mo and the 0 valence Mo are present in the catalyst with a specific ratio.
2. In the oil product hydrotreating method according to the invention, the hydrogenation decarbonization catalyst in use is added with Zn and/or Cu, and the hydrodecarbonization catalyst in use is added with Mg, such that the catalysts have enhanced hydrogenation decarbonization capability, hydrodearomatization capability and residual carbon removal capability, the catalysts are suitable for processing the oil product with a low sulfur content and a high nitrogen content, especially the ebullated bed hydrogenation tail oil.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the invention, all percentages and percentage contents are calculated in terms of mass.

The first aspect of the present invention provides a hydrogenation catalyst comprising a support and an active component, the active component comprises Mo and a divalent metal, and the divalent metal is at least one selected from the group consisting of Mg, Zn and Cu; based on the total weight of the hydrogenation catalyst, the content of Mo is within the range of 3-18%, the content of the divalent metal is within the range of 0.1-7%, and the mass ratio of Mo to S is 1.5 or more.

Preferably, based on the total weight of the hydrogenation catalyst, the content of Mo is within the range of 5-16%, the content of said divalent metal is within the range of 0.2-4.5%, and the mass ratio of Mo to S is within the range of 1.5-3, more preferably 1.6-2.4.

The content of S in the sulfide hydrogenation catalyst in the prior art is generally above 10 wt%, while the active component of the present invention uses Mo in combination with a divalent metal (at least one of Mg, Zn and Cu) and the content of S in the catalyst is controlled to a low level, which is advantageous to improving the hydrotreating capacity of the catalyst and preventing the loss of S in the active phase under the low sulfur reaction environment.

Preferably, the hydrogenation catalyst has a mass ratio of Mo to S within the range of 1.6-2.4. While in the prior art, the mass ratio of Mo to S is typically below 1.5, generally between 1 and 1.3. The use of such a preferred embodiment advantageously improves the hydrotreating capacity of the catalyst and prevents the loss of sulfur in the active phase under the low sulfur reaction environment.

Preferably, based on the total weight of the hydrogenation catalyst, the content of said support is within the range of 75-92%, such as 75%, 80%, 85%, 90%, 92%, and the total content of Mo, divalent metal and S is within the range of 8-25%, such as 8%, 10%, 15%, 20%, 25%.

In the present invention, the contents of Mo, divalent metal and S in the hydrogenation catalyst can be measured by an Inductively Coupled Plasma (ICP), using the OPTIMA 7000 DV type atomic emission spectrometer manufactured by the PE Incorporation. 0.1g of a sample is dissolved in a mixed solution consisting of HCl, HNO₃ and HF in a volume ratio of 3HCl:1HNO₃:0.5HF, the mixed solution is then diluted with deionized water to a volume such that a content of the element to be measured in the solution is within the range of 1-10 ppm, the measurement is then performed.

According to a preferred embodiment of the present invention, the hydrogenation catalyst is composed of the support, the active component and S element, wherein the active component comprises Mo and the divalent metal.

According to a preferred embodiment of the invention, Mo comprises +2 valence Mo, 0 valence Mo, and +4 valence Mo in the catalyst tested by XPS. More preferably, +2 valence Mo is contained in an amount of 50-75%, 0 valence Mo is contained in an amount of 10-32%, +4 valence Mo is contained in an amount of 1-25%, based on the total amount of Mo calculated in terms of atoms; further preferably, +2 valence Mo is contained in an amount of 50-70%, 0 valence Mo is contained in an amount of 15-29%, +4 valence Mo is contained in an amount of 4-25%, based on the total amount of Mo calculated in terms of atoms. The present inventors have discovered during researches that by controlling the contents of Mo with different valence states in the metal active phase, in particular the specific contents of +2 valence Mo and 0 valence Mo in the catalyst, it is more advantageous to bind the Mo with a divalent metal and S to form the metal active phase, and it is more conducive to preventing the loss of sulfur from the active phase under the low-sulfur reaction environment.

According to a preferred embodiment of the present invention, the total content of +2 valence Mo, 0 valence Mo and +4 valence Mo in the total amount of Mo calculated in terms of atoms in the catalyst tested by XPS is more than 90%, preferably within the range of 90-99%. The catalyst provided by the present invention may further contain +5 valence Mo or +6 valence Mo, in addition to +2 valence Mo, 0 valence Mo and +4 valence Mo.

In the invention, the test conditions of the XPS include: light source: Mg Kα, energy step length: 0.05 eV, scan range: 200-250 eV (molybdenum), 280-300 eV (carbon). When analyzing the valence state of molybdenum, it is believed that the molybdenum with a binding energy of 227-228 eV on the 3d5/2 track is the 0 valence Mo species, the molybdenum with a binding energy of 228-229 eV on the 3d5/2 track is the +2 valence Mo species, the molybdenum with a binding energy of 229-231 eV on the 3d5/2 track is the +4 valence Mo species, the molybdenum with a binding energy larger than 231 eV on the 3d5/2 track is +5 valence Mo or +6 valence Mo.

The support is not particularly limited in the invention, it may be a variety of supports conventionally used in the field, it may be commercially available, or prepared with any one of the methods in the prior art, for example, the support may be an inorganic refractory oxide. Preferably, the support is at least one selected from the group consisting of alumina, silica, titania, zirconia, and amorphous silica-alumina. When comprehensively considering the costs and effects, it is preferred that the support is alumina.

In the invention, the support may further contain a doping element, which may be, for example, one or more of phosphorus, silicon, boron, fluorine, sodium, and other elements. The doping element may be added in a conventional addition amount, preferably in an amount of 0.2-3% by mass of the support.

According to a preferred embodiment of the invention, the support has a specific surface area of 200-400 m²/g and a pore volume of 0.4-1.2 cm³/g.

According to a preferred embodiment of the invention, the divalent metal is Mg, based on the total weight of the hydrogenation catalyst, Mo is contained in an amount of 5-15%, Mg is contained in an amount of 0.2-1.5%, preferably in an amount of 0.5-1.5%, the mass ratio of Mo to S is within the range of 1.5-3. More preferably, +2 valence Mo is contained in an amount of 55-70%, 0 valence Mo is contained in an amount of 15-29%, +4 valence Mo is contained in an amount of 4-20%, based on the total amount of Mo calculated in terms of atoms. The inventors of the present invention have found during the researches that the hydrogenation catalyst according to the preferred embodiment is particularly suitable for hydrogenation decarbonization treatment of oil products.

According to a preferred embodiment of the invention, the divalent metal is Zn and/or Cu; based on the total weight of the hydrogenation catalyst, Mo is contained in an amount of 6-16%, Zn and/or Cu is contained in an amount of 0.5-4.5%, the mass ratio of Mo to S is within the range of 1.5-3. More preferably, +2 valence Mo is contained in an amount of 50-75%, 0 valence Mo is contained in an amount of 10-30%, +4 valence Mo is contained in an amount of 1-25%, based on the total amount of Mo calculated in terms of atoms; further preferably, +2 valence Mo is contained in an amount of 50-65%, 0 valence Mo is contained in an amount of 15-27%, +4 valence Mo is contained in an amount of 8-25%, based on the total amount of Mo calculated in terms of atoms. The inventors of the present invention have discovered during researches that the hydrogenation catalyst according to the preferred embodiment is particularly suitable for hydrogenation decarbonization treatment of oil products.

The second aspect of the present invention provides a method for preparing a hydrogenation catalyst, the method comprises the following steps:
(1) Introducing molybdenum hexacarbonyl and an organic divalent metal compound into a support through an impregnation method to obtain a catalyst precursor I, wherein the divalent metal is at least one selected from the group consisting of Mg, Zn and Cu;
(2) Contacting a dispersant with the catalyst precursor I in the presence of an inert gas to obtain a catalyst precursor II;

The method may further comprise step (3-1) or step (3-2), wherein,
Step (3-1) comprises: vulcanizing the catalyst precursor II, the vulcanizing process causes that the hydrogenation catalyst has a mass ratio of Mo to S being 1.5 or more, preferably within the range of 1.5-3;
Step (3-2) comprises: impregnating the catalyst precursor II with an impregnation liquid containing a polysulfide, and then subjecting to drying.

According to the process provided by the invention, the expression "the method may further comprise step (3-1) or step (3-2)" may be comprehended that the catalyst precursor II can be treated according to step (3-1), or the catalyst precursor II can be treated according to step (3-2), or a portion of the catalyst precursor II may be treated by step (3-1), and the remainder of the catalyst precursor II may be treated by step (3-2). It is preferably in the invention that the catalyst precursor II is treated according to step (3-2).

The selection ranges of support types in the method provided by the invention may be same as those selection ranges in the first aspect mentioned above, and the contents will not be repeatedly described herein.

In the method provided by the invention, the impregnation method is not particularly limited, it may be an equal volume impregnation process or an excessive impregnation process. In the present invention, the molybdenum hexacarbonyl and organic divalent metal compound may be introduced simultaneously into the support by co-impregnation, or the molybdenum hexacarbonyl and organic divalent metal compound may be introduced into the support respectively by consecutive impregnation, the sequence of introducing two compounds are not particularly limited. When the organic divalent metal compound includes two or more compounds, which may be introduced simultaneously into the support by co-impregnation, or may be introduced into the support respectively by consecutive impregnation. According to the present invention, it is preferred that the molybdenum hexacarbonyl and an organic divalent metal compound are introduced into the support by co-impregnation.

According to a preferred embodiment of the invention, step (1) comprises: impregnating the support with an impregnation liquid containing molybdenum hexacarbonyl and an organic divalent metal compound, and then subjecting to drying. Preferably, the impregnation method includes an equal volume impregnation process or an excessive impregnation process. The drying conditions are selected in a wide range, as long as the solvent can be removed, the molybdenum hexacarbonyl and the organic divalent metal compound are not evaporated.

According to the invention, preferably, the drying is vacuum drying at reduced pressure, further preferably, the drying conditions comprises: a drying temperature of 60-120°C, more preferably 80-100°C; a drying vacuum degree of 0.1-2 torr, more preferably 0.2-1 torr; and a drying time of 1-10 hours, more preferably 2-8 hours.

The solvent in the impregnation liquid according to the present invention can be selected from a wide range, as long as the solvent can provide the desired environment for impregnation, preferably, the solvent in the impregnation liquid is an organic solvent, more preferably selected from alcohols and/or aromatic hydrocarbons. According to a preferred embodiment of the invention, the solvent is at least one selected from the group consisting of ethanol, benzene, toluene, xylene, ethylbenzene and tetrahydronaphthalene, more preferably at least one selected from the group consisting of toluene, xylene, ethylbenzene and tetrahydronaphthalene, and optionally ethanol.

Preferably, the concentration of molybdenum hexacarbonyl in the impregnation liquid is within the range of 0.2-3.5 mol/L, more preferably within the range of 0.3-2 mol/L.

Preferably, the concentration of said organic divalent metal compound in the impregnation liquid is within the range of 0.02-0.9 mol/L, such as 0.02 mol/L, 0.05 mol/L, 0.1 mol/L, 0.2 mol/L, 0.3 mol/L, 0.4 mol/L, 0.5 mol/L, 0.6 mol/L, 0.7 mol/L, 0.8mol/L, 0.9 mol/L. When there are two or more kinds of divalent metals, the concentration of the organic divalent metal compound refers to the total concentration of two or more divalent metals.

According to an embodiment of the invention, the organic divalent metal compound comprises at least one of an organomagnesium compound, an organozinc compound, and an organocopper compound.

According to the invention, it is preferred that the organomagnesium compound is at least one selected from the group consisting of magnesium citrate, magnesium glycinate, magnesium gluconate, magnesium salicylate and magnesium laurate.

According to the present invention, the organozinc compound is preferably at least one selected from the group consisting of zinc propionate, zinc octoate, zinc lactate and zinc fumarate.

According to the present invention, the organocopper compound is preferably at least one selected from the group consisting of copper propionate, copper naphthenate, copper citrate, copper acetylacetonate and copper lactate.

According to the present invention, it is preferable that the support, molybdenum hexacarbonyl and organic divalent metal compound are used in an amount such that in the prepared hydrogenation catalyst, the content of Mo is within the range of 3-18%, preferably within the range of 5-16%, the content of said divalent metal is within the range of 0.1-7%, preferably within the range of 0.2-4.5%, based on the total weight of said hydrogenation catalyst. The use amount and concentration of the impregnation liquid can be appropriately selected by those skilled in the art according to the above disclosure.

The contacting of the dispersant with the catalyst precursor I in step (2) of the present invention provides an organomolybdenum dimer with desirable stability, it further facilitates the subsequent formation of a highly dispersible active phase. The mode of contacting the dispersant with the catalyst precursor I is not particularly limited in the invention, the contacting may be carried out continuously or intermittently. The dispersant may be introduced in a gaseous form or a liquid form, the invention does not impose specific limitations thereto.

According to the present invention, the kinds of the dispersant are selected from a wide range, provided that the organomolybdenum dimer with good stability is obtained by contacting the dispersant with the catalyst precursor I, preferably, the dispersant is at least one selected from the group consisting of acetic acid, acetic anhydride, citric acid, dimethyl malonate, malonic acid and succinic acid; further preferably, the dispersant is acetic acid and/or acetic anhydride.

Preferably, the dosage of said dispersant in step (2) is 1-10 g, preferably 2-5 g, relative to 1g of the catalyst precursor I.

According to the method provided by the invention, preferably, the contacting conditions in step (2) comprise: a pressure of 0-1 MPa, more preferably 0.1-0.5 MPa, a temperature of 80-180°C, more preferably 100-150°C, and a time of 8-36 hours, more preferably 12-24 hours, wherein the pressure is a gauge pressure.

Preferably, the method further comprises: after the contacting in step (2), removing the remaining dispersant by evaporative drying, more preferably by vacuum drying at reduced pressure. The drying conditions are selected from a wide range, as long as the drying can remove the solvent without causing the substantial loss of the loaded organic molybdenum species and organic divalent metal compound from the support surface. Preferably, the evaporative drying conditions comprise: a drying temperature of 80-150°C, more preferably 100-120°C, a drying vacuum degree of 0.1-2 torr, more preferably 0.2-1 torr, and a drying time of 1-8 hours, more preferably 2-6 hours.

In the present invention, the inert gas is preferably at least one selected from the group consisting of nitrogen gas, helium gas, argon gas, and neon gas.

According to a preferred embodiment of the invention, said contacting in step (2) may be carried out in a reaction kettle, such as an autoclave, preferably under a hermetic condition.

According to a preferred embodiment of the invention, the dispersant and said catalyst precursor I are placed in a reactor kettle, sealed and then introduced with an inert gas to the contact pressure, heated to a contact temperature, and kept at a constant temperature. The method further comprises subjecting the catalyst precursor obtained in step (2) to vacuum drying at reduced pressure after cooling.

The vulcanizing of step (3-1) is not particularly limited in the invention, it may be carried out with the conventional methods in the art. The vulcanizing may be performed with a generally known method, preferably, the vulcanizing comprises a dry method vulcanizing and/or a wet method vulcanizing. The dry method vulcanizing and the wet method vulcanizing according to the present invention have the conventional meaning in the field. The conditions of the dry method vulcanizing and the wet method vulcanizing are not particularly limited, so as to it can meet that the mass ratio of Mo to S in the hydrogenation catalyst is 1.5 or more (preferably within the range of 1.5-3, more preferably within the range of 1.6-2.4).

The present invention preferably adopts step (3-2) to treat the catalyst precursor II, it is more advantageously to prepare a catalyst having better hydrotreating capacity.

The specific embodiments of the impregnation in step (3-2) may be as described above, and the content will not be repeatedly described herein. Preferably, the impregnation in step (3-2) is an equal volume impregnation.

In the present invention, the polysulfide refers to that one mole of the compound contains at least 2 moles (e.g., 2-3 moles) of sulfur.

According to the present invention, preferably, the polysulfide in step (3-2) is at least one selected from the group consisting of di-tert-butyl polysulfide (the sulfur number is preferably 2-3), tert-nonyl polysulfide (the sulfur number is preferably 2-3), tert-dodecyl polysulfide (the sulfur number is preferably 2-3), and di-hexyl disulfide.

In the present invention, the di-tert-butyl polysulfides include, but are not limited to, di-tert-butyl disulfide, di-tert-butyl trisulfide.

In the present invention, the tert-nonyl polysulfide include, but are not limited to, tert-nonyl di-polysulfide and tert-nonyl tri-polysulfide.

In the present invention, the tert-dodecyl polysulfide includes, but is not limited to, tert-dodecyl tri-polysulfide, tert-dodecyl di-polysulfide.

The di-hexyl disulfide is, for example, n-di-hexyl disulfide or tert-di-hexyl disulfide.

The present invention has a wide range of choices of solvent types in the impregnation liquid containing polysulfides. Preferably, the solvent in the impregnation liquid containing polysulfides is at least one of C5-C10 alkane and/or cycloalkane and aromatic hydrocarbon.

According to a preferred embodiment of the present invention, the solvent in the impregnation liquid containing polysulfide is at least one selected from the group consisting of cyclohexane, n-heptane, n-octane, tetrahydronaphthalene, decalin, toluene and xylene.

Preferably, the mass concentration of the impregnation liquid containing polysulfide is within the range of 2-20%, more preferably within the range of 3-15%.

Preferably, the impregnation liquid containing the polysulfide and the catalyst precursor II are used in such an amount that in the prepared hydrogenation catalyst, the mass ratio of Mo to S is 1.5 or more, preferably within the range of 1.5-3, more preferably within the range of 1.6-2.4.

According to the method in the present invention, in a case of preferably, the method further comprises drying after said impregnation. Preferably, the drying is vacuum drying at reduced pressure, further preferably, the drying conditions comprise: a drying temperature of 60-120°C, preferably 80-100°C, a drying vacuum degree of 0.1-2 torr, preferably 0.2-1 torr, and a drying time of 1-6 hours, preferably 2-4 hours.

According to the method provided by the invention, the material obtained from drying in step (3-2) may be directly used as a product, and it may be treated with hydrogen gas prior to use of the product. Alternatively, material obtained from drying in step (3-2) may be treated with hydrogen gas, and then used directly. It is understandable that each of the methods prior to and after the hydrogen gas treatment and the obtained products falls into the protection scope of the invention.

Preferably, step (3-2) further comprises: performing a hydrogen gas treatment on the dried material.

According to the present invention, preferably, said hydrogen gas treatment in step (3-2) is performed under a hydrogen gas atmosphere provided by a hydrogen-containing gas.

Preferably, the hydrogen-containing gas comprises hydrogen gas and an inert gas. The kinds and selection ranges of the inert gas are described above, and will not be repeatedly described herein.

According to the present invention, it is preferable that the hydrogen content in said hydrogen-containing gas is preferably not less than 50vol%, more preferably within the range of 50-100vol%, further preferably 100vol%.

Preferably, the hydrogen gas is passed once in the hydrogen gas treatment process. More preferably, the dosage of hydrogen gas is within the range of 0.1-1 NL, more preferably within the range of 0.2-0.8 NL, relative to 1g of the dried material.

According to a preferred embodiment of the invention, the hydrogen gas treatment is carried out under the hermetic condition (e.g., in a reaction kettle).

According to the present invention, it is preferred that the hydrogen gas treatment conditions comprise: the hydrogen treatment temperature is within the range of 180-300°C, more preferably within the range of 200-260°C; the treatment time is within the range of 2-10 hours, more preferably within the range of 3-6 hours.

According to one specific embodiment of the invention, the method may further comprise a process of cooling after the hydrogen gas treatment, and then displacing the hydrogen gas with an inert gas.

The third aspect of the present invention provides the hydrogenation catalyst prepared with the method according to the second aspect.

The fourth aspect of the present invention provides an use of the hydrogenation catalyst according to the first aspect or the third aspect in an oil product hydrotreating. An use of the catalyst provided by the invention in hydrogenation of an oil product provides the desirable hydrotreating capacity and stability. The choice of different divalent metals also provides additional advantages to the catalyst provided by the invention. For example, the catalyst is particularly suitable for hydrogenation of an oil product and removal of residual carbon when the divalent metal in the catalyst is magnesium metal, the catalyst is particularly suitable for hydrogenation decarbonization for an oil product when the divalent metal in the catalyst is Cu and/or Zn.

The fifth aspect of the present invention provides an oil product hydrotreating method, the method comprising: contacting an oil product with the hydrogenation catalyst according to the first aspect and the third aspect and carrying out the reaction under the hydrotreating conditions

The hydrotreating process provided by the invention may be carried out in a fixed bed reactor.

Preferably, the hydrotreating conditions comprise: a reaction hydrogen pressure within the range of 4-25 MPa, more preferably within the range of 12-25 MPa, a hydrogen/oil volume ratio of (200-2,500): 1, more preferably (500-2,000): 1, a volume hourly space velocity within the range of 0.1-3 h⁻¹, more preferably within the range of 0.1-0.5 h⁻¹, a reaction temperature within the range of 280-480°C, more preferably within the range of 300-450°C.

The oil product is selected from a wide range, it may be any oil product which has a need for hydrotreating with a conventional method in the prior art. Preferably, the oil product has a mass content of sulfur within the range of 0-5,000 ppm, preferably within the range of 100-4,000 ppm, for example 100 ppm, 500 ppm, 1,000 ppm, 1,500 ppm, 2,000 ppm, 2,500 ppm, 3,000 ppm, 3,500 ppm, 4,000 ppm.

Preferably, the oil product has a nitrogen/sulfur mass ratio within the range of 0.5-2.

Preferably, the oil product is at least one selected from the group consisting of ebullated bed hydrogenation tail oil, low-sulfur coal tar, and low-sulfur Fischer-Tropsch synthesis oil, more preferably ebullated bed hydrogenation tail oil. The method provided by the invention is particularly suitable for hydroprocessing ebullated bed hydrogenation tail oil. Since the ebullated bed hydrogenation tail oil, unlike straight-run residual oil, is a residual oil following a hydrotreating process in an ebullated bed, although it has the characteristics of low contents of sulfur, nitrogen and aromatic hydrocarbons, the surrounding of nitrogen atoms in the remaining nitrides are generally protected by a large amount of condensed aromatic rings, the nitrogen atoms are more difficult to approach and remove from the active centers of the catalyst, the hydrogenation removal difficulties are further exacerbated. When the hydroprocessing method of the invention is used for treating the ebullated bed hydrogenation tail oil, it is possible to ensure that the hydrogenation and hydrogenation decarbonization activities are fully exploited under the low-sulfur environments, thus it is more beneficial for improving the hydroprocessing stability.

Preferably, the properties of the ebullated bed hydrogenation tail oil comprise: a density of 0.95-1.05 g/cm³, a mass content of sulfur lower than 8,000 ppm, more preferably within the range of 1,500-7,000 ppm, a mass content of nitrogen within the range of 500-5,000 ppm, and a mass content of residual carbon within the range of 8-25%.

According to the hydrotreating method provided by the invention, the oil product may be subjected to a single stage hydrotreating by using a catalyst provided by the invention, and may be subjected to multiple stages of hydrotreating as required.

In a single stage hydrotreating process, the hydrogenation catalyst preferably comprises a hydrodecarbonization catalyst and a hydrogenation decarbonization catalyst (the filling volume ratio of the hydrodecarbonization catalyst and the hydrogenation decarbonization catalyst can be selected from a wide range, the ratio may be (10-90): (10-90) ); the divalent metal in said hydrodecarbonization catalyst is Mg, and the divalent metal in said hydrogenation decarbonization catalyst is Cu and/or Zn. An use of the preferred embodiment further facilitates the removal of residual carbon, nitrogen and aromatic hydrocarbons from inferior oil products.

To further enhance the treatment effect of the ebullated bed hydrogenation tail gas, preferably, the method comprises: contacting an ebullated bed hydrogenation tail gas with at least one hydrodecarbonization catalyst and at least one hydrogenation decarbonization catalyst and carrying out the reaction under the hydrotreating conditions, wherein the hydrodecarbonization catalyst and the hydrogenation decarbonization catalyst are each independently a hydrogenation catalyst according to the first aspect or the third aspect, wherein the divalent metal in said hydrodecarbonization catalyst is Mg, and the divalent metal in said hydrogenation decarbonization catalyst is Cu and/or Zn. The hydrogenation decarbonization catalyst in use is added with Zn and/or Cu, and hydrodecarbonization catalyst in use is added with Mg, such that the catalysts have better capabilities of hydrogenation decarbonization, hydrogenation and removing aromatic hydrocarbons, and hydrogenation and removing residual carbon.

Preferably, based on the total weight of said hydrodecarbonization catalyst, the content of Mo in the hydrodecarbonization catalyst is within the range of 5-15%, the content of Mg is within the range of 0.2-1.5%, more preferably within the range of 0.5-1.5%; the mass ratio of Mo to S is within the range of 1.5-3.

Preferably, based on the total weight of said hydrogenation decarbonization catalyst, the content of Mo in the hydrogenation decarbonization catalyst is within the range of 6-16%, the content of Cu and/or Zn is within the range of 0.5-4.5%; the mass ratio of Mo to S is within the range of 1.5-3.

Preferably, the method provided by the invention uses a fixed bed hydrogenation process. More preferably, the hydrodecarbonization catalyst is disposed upstream the hydrogenation decarbonization catalyst along the flow direction of materials. The specific modes of arranging the hydrodecarbonization catalyst and the hydrogenation decarbonization catalyst are not particularly limited in the invention, for example, the hydrodecarbonization catalyst is filled into the upper bed layer for performing the hydrodecarbonization reaction, and hydrogenation decarbonization catalyst is filled into the lower bed layer for performing the hydrogenation decarbonization reaction. The preferred embodiment provides a solution of initially subjecting an oil product to hydrodecarbonization and then subjecting to hydrogenation decarbonization, it is more conducive to enhancing the treatment effect of the ebullated bed hydrogenation tail oil.

Preferably, the ratio of the filling volume of said hydrodecarbonization catalyst to the filling volume of said hydrogenation decarbonization catalyst is 1: (0.3-3).

Preferably, the hydrodecarbonization reaction conditions comprise: a reaction temperature of 300-420°C, a reaction pressure of 12-25 MPa, a hydrogen/oil volume ratio of (500-2,000): 1, and a liquid hourly volumetric space velocity within the range of 0.1-0.5h⁻¹.

Preferably, the hydrogenation decarbonization reaction conditions comprise: a reaction temperature of 300-450°C, a reaction pressure of 12-25 MPa, a hydrogen/oil volume ratio of (500-2,000): 1, and a liquid hourly volumetric space velocity within the range of 0.1-0.5 h⁻¹.

Further preferably, the hydrogenation decarbonization reaction temperature is at least 5°C, preferably 10-40°C higher than the hydrodecarbonization reaction temperature.

The method further comprises filling a hydrogenation protective agent and/or a hydrodemetallization catalyst upstream the hydrodecarbonization catalyst. The type and sequence of filling the hydrogenation protective agent and the hydrodemetallization catalyst are not particularly limited in the invention, both may be selected in accordance with conventional technical means in the art, the content will not be further described herein. Preferably, the filling volume of the hydrogenation protective agent is 5-25% of the total filling volume of catalysts, and the filling volume of the hydrodemetallization catalyst is 5-25% of the total filling volume of catalysts.

Preferably, the filling volume of the hydrodecarbonization catalyst and hydrogenation decarbonization catalyst is 50% or more, preferably 60% or more, and more preferably 60-75% of the total filling volume of catalysts.

The preparation process and product properties of the method of the invention are further illustrated below with reference to examples and comparative examples, but the following examples do not constitute limitations to the method of the invention.

In the following examples and comparative examples, the contents of said components in the hydrogenation catalyst were tested by the ICP method, and the specific method was as described above.

In the following examples and comparative examples, the operating conditions of XPS were as follows: light source: light source: Mg Kα, energy step length: 0.05 eV, scan range: 200-250 eV (molybdenum), 280-300 eV (carbon). When analyzing the valence state of molybdenum, it was believed that the molybdenum with a binding energy of 227-228eV on the 3d5/2 track was the 0 valent Mo species, the molybdenum with a binding energy of 228-229eV on the 3d5/2 track was the +2 valence Mo species, the molybdenum with a binding energy of 229-231eV on the 3d5/2 track was the +4 valence Mo species, the molybdenum with a binding energy larger than 231eV on the 3d5/2 track was +5 valence Mo or +6 valence Mo.

Two kinds of supports were selected in the examples and comparative examples of the invention.

1,000.0 g of alumina xerogel powder was weighed, 15.0 g of acetic acid and 30.0 g of tetrabutylalcohol were added, the materials were mixed uniformly, 1,000.0 g of an aqueous solution containing nitric acid in a mass fraction of 2.0% was added, the mixture was subjected to grinding for 10.0 min, then extruded into strips by using a perforated plate with a 2.0 mm diameter trefoil. The strips were subjected to drying at 120°C for 4.0 h, and subjected to calcination at 600°C for 4.0 h. The calcined support was denoted as S-1, and molded and sieved to a length of 4-6 mm. The support properties were as follows: a specific surface area of 290 m²/g, and a pore volume of 0.96 cm³/g.

1,000.0 g of alumina xerogel powder was weighed, 20.0 g of succinic acid and 10.0 g of sesbania powder were added, the materials were mixed uniformly, 1,000.0 g of an aqueous solution containing nitric acid in a mass fraction of 3.0% was added, the mixture was subjected to grinding for 10.0 min, then extruded into strips by using a clove pore plate with a diameter of 1.8 mm. The strips were subjected to drying at 140°C for 4.0h, and subjected to calcination at 550°C for 4.0 h. The calcined support was denoted as S-2, and molded and sieved to a length of 3-5 mm. The support properties were as follows: a specific surface area of 315 m²/g, and a pore volume of 0.82 cm³/g.

### Example 1

### Preparation of hydrogenation catalyst Cat-1:

20.0 g of molybdenum hexacarbonyl and 10.0 g of magnesium citrate were weighed, and mixed with 120 g of toluene and 30.0 g of ethanol, a solution MQ-1 was prepared.

100.0 g of the S-1 was taken, impregnated with the solution MQ-1, the impregnated S-1 was subjected to a reduced pressure drying at a drying temperature of 100°C and a vacuum degree of 0.5 torr for a drying time of 6.0 hours, the obtained catalyst precursor was designated as P-1.

The catalyst precursor P-1 was placed in an autoclave, and added with 250.0 g of acetic acid, the autoclave was sealed, nitrogen gas with a pressure of 0.5 MPa was then introduced, the autoclave was heated to 100°C, kept at the constant temperature for 24 hours, the catalyst was cooled and then subjected to reduced pressure drying at a drying temperature of 120°C and a vacuum degree of 0.2 torr for a drying time of 4.0 hours, the obtained catalyst precursor was designated as Y-1.

10 g of di-tert-butyl tri-polysulfide and 80.0g of toluene were prepared into a solution SQ-1. The catalyst precursor Y-1 was impregnated with the solution SQ-1, the catalyst was subjected to reduced pressure drying at a dry temperature of 90°C and a vacuum degree of 0.3 torr for a dry time of 4.0 hours, the produced catalyst precursor was designated as SY-1.

50.0 g of the catalyst precursor SY-1 was filled in a reaction kettle, and 30.0 NL of hydrogen gas was introduced under a hermetic condition, the reaction temperature was controlled to be 200°C, the reaction was performed for 4.0 hours, the autoclave was cooled, the hydrogen in said autoclave was replaced with nitrogen gas, the prepared catalyst was denoted as Cat-1.

### Example 2

### Preparation of hydrogenation catalyst Cat-2:

30.0 g of molybdenum hexacarbonyl and 10.0g of magnesium glycinate were weighed, and mixed with 120 g of xylene and 30.0 g of ethanol, a solution MQ-2 was prepared.

100.0 g of the S-1 was taken, impregnated with the solution MQ-2, the impregnated S-1 was subjected to a reduced pressure drying at a drying temperature of 120°C and a vacuum degree of 0.2 torr for a drying time of 5.0 hours, the obtained catalyst precursor was designated as P-2.

The catalyst precursor P-2 was placed in an autoclave, and added with 270.0 g of acetic acid, the autoclave was sealed, nitrogen gas with a pressure of 0.3 MPa was then introduced, the autoclave was heated to 120°C, kept at the constant temperature for 24 hours, the catalyst was cooled and then subjected to reduced pressure drying at a drying temperature of 110°C and a vacuum degree of 0.2 torr for a drying time of 4.0 hours, the obtained catalyst precursor was designated as Y-2.

10 g of tert-nonyl tri-polysulfide and 80.0g of tetrahydronaphthalene were prepared into a solution SQ-2. The catalyst precursor Y-2 was impregnated with the solution SQ-2, the catalyst was subjected to reduced pressure drying at a dry temperature of 100°C and a vacuum degree of 0.2 torr for a dry time of 4.0 hours, the produced catalyst precursor was designated as SY-2.

50.0 g of the catalyst precursor SY-2 was filled in a reaction kettle, and 35.0 NL of hydrogen gas was introduced under a hermetic condition, the reaction temperature was controlled to be 220°C, the reaction was performed for 4.0 hours, the autoclave was cooled, the hydrogen in said autoclave was replaced with nitrogen gas, the prepared catalyst was denoted as Cat-2.

### Example 3

### Preparation of hydrogenation catalyst Cat-3:

40.0 g of molybdenum hexacarbonyl and 20.0 g of magnesium salicylate were weighed, and mixed with 120g of benzene and 30.0 g of ethanol, a solution MQ-3 was prepared.

100.0 g of the S-1 was taken, impregnated with the solution MQ-3, the impregnated S-1 was subjected to a reduced pressure drying at a drying temperature of 120°C and a vacuum degree of 0.2 torr for a drying time of 6.0 hours, the obtained catalyst precursor was designated as P-3.

The catalyst precursor P-3 was placed in an autoclave, and added with 260.0 g of acetic hydride, the autoclave was sealed, nitrogen gas with a pressure of 0.2 MPa was then introduced, the autoclave was heated to 110°C, kept at the constant temperature for 30 hours, the catalyst was cooled and then subjected to reduced pressure drying at a drying temperature of 120°C and a vacuum degree of 0.2 torr for a drying time of 6.0 hours, the obtained catalyst precursor was designated as Y-3.

10 g of tert-dodecyl tri-polysulfide and 80.0 g of decalin were prepared into a solution SQ-3. The catalyst precursor Y-3 was impregnated with the solution SQ-3, the catalyst was subjected to reduced pressure drying at a dry temperature of 110°C and a vacuum degree of 0.2 torr for a dry time of 6.0 hours, the produced catalyst precursor was designated as SY-3.

50.0 g of the catalyst precursor SY-3 was filled in a reaction kettle, and 25.0 NL of hydrogen gas was introduced under a hermetic condition, the reaction temperature was controlled to be 240°C, the reaction was performed for 3.0 hours, the autoclave was cooled, the hydrogen in said autoclave was replaced with nitrogen gas, the prepared catalyst was denoted as Cat-3.

### Example 4

### Preparation of hydrogenation catalyst Cat-4:

30.0 g of molybdenum hexacarbonyl and 15.0g of zinc propionate were weighed, and mixed with 120 g of xylene, a solution MQ-4 was prepared.

100.0 g of the S-2 was taken, impregnated with the solution MQ-4, the impregnated S-2 was subjected to a reduced pressure drying at a drying temperature of 110°C and a vacuum degree of 0.3 torr for a drying time of 5.0 hours, the obtained catalyst precursor was designated as P-4.

The catalyst precursor P-4 was placed in an autoclave, and added with 240.0 g of acetic acid, the autoclave was sealed, nitrogen gas with a pressure of 0.3 MPa was then introduced, the autoclave was heated to 120°C, kept at the constant temperature for 24 hours, the catalyst was cooled and then subjected to reduced pressure drying at a drying temperature of 110°C and a vacuum degree of 0.2 torr for a drying time of 4.0 hours, the obtained catalyst precursor was designated as Y-4.

10 g of tert-nonyl tri-polysulfide and 80.0g of tetrahydronaphthalene were prepared into a solution SQ-4. The catalyst precursor Y-4 was impregnated with the solution SQ-4, the catalyst was subjected to reduced pressure drying at a dry temperature of 100°C and a vacuum degree of 0.2 torr for a dry time of 4.0 hours, the produced catalyst precursor was designated as SY-4.

50.0 g of the catalyst precursor SY-4 was filled in a reaction kettle, and 35.0 NL of hydrogen gas was introduced under a hermetic condition, the reaction temperature was controlled to be 220°C, the reaction was performed for 4.0 hours, the autoclave was cooled, the hydrogen in said autoclave was replaced with nitrogen gas, the prepared catalyst was denoted as Cat-4.

### Example 5

### Preparation of hydrogenation catalyst Cat-5:

40.0 g of molybdenum hexacarbonyl and 20.0 g of zinc lactate were weighed, and mixed with 120g of ethylbenzene, a solution MQ-5 was prepared.

100.0 g of the S-2 was taken, impregnated with the solution MQ-5, the impregnated S-2 was subjected to a reduced pressure drying at a drying temperature of 120°C and a vacuum degree of 0.2 torr for a drying time of 6.0 hours, the obtained catalyst precursor was designated as P-5.

The catalyst precursor P-5 was placed in an autoclave, and added with 260.0g of acetic acid, the autoclave was sealed, nitrogen gas with a pressure of -0.4 MPa was then introduced, the autoclave was heated to 110°C, kept at the constant temperature for 30 hours, the catalyst was cooled and then subjected to reduced pressure drying at a drying temperature of 120°C and a vacuum degree of 0.2 torr for a drying time of 6.0 hours, the obtained catalyst precursor was designated as Y-5.

10 g of tert-dodecyl tri-polysulfide and 80.0g of decalin were prepared into a solution SQ-5. The catalyst precursor Y-5 was impregnated with the solution SQ-5, the catalyst was subjected to reduced pressure drying at a dry temperature of 110°C and a vacuum degree of 0.2 torr for a dry time of 6.0 hours, the produced catalyst precursor was designated as SY-5.

50.0 g of the catalyst precursor SY-5 was filled in a reaction kettle, and 25.0 NL of hydrogen gas was introduced under a hermetic condition, the reaction temperature was controlled to be 240°C, the reaction was performed for 3.0 hours, the autoclave was cooled, the hydrogen in said autoclave was replaced with nitrogen gas, the prepared catalyst was denoted as Cat-5.

### Example 6

### Preparation of hydrogenation catalyst Cat-6:

50.0 g of molybdenum hexacarbonyl and 15.0 g of zinc fumarate were weighed, and mixed with 120g of tetrahydronaphthalene, a solution MQ-6 was prepared.

100.0 g of the S-2 was taken, impregnated with the solution MQ-6, the impregnated catalyst was subjected to a reduced pressure drying at a drying temperature of 110°C and a vacuum degree of 0.2 torr for a drying time of 4.0 hours, the obtained catalyst precursor was designated as P-6.

The catalyst precursor P-6 was placed in an autoclave, and added with 280.0g of acetic acid, the autoclave was sealed, nitrogen gas with a pressure of 0.4 MPa was then introduced, the autoclave was heated to 120°C, kept at the constant temperature for 32 hours, the catalyst was cooled and then subjected to reduced pressure drying at a drying temperature of 120°C and a vacuum degree of 0.2 torr for a drying time of 5.0 hours, the obtained catalyst precursor was designated as Y-6.

10 g of tert-dihexyl disulfide and 80.0 g of tetrahydronaphthalene were prepared into a solution SQ-6. The catalyst precursor Y-6 was impregnated with the solution SQ-6, the catalyst was subjected to reduced pressure drying at a dry temperature of 120°C and a vacuum degree of 0.2 torr for a dry time of 6.0 hours, the produced catalyst precursor was designated as SY-6.

50.0 g of the catalyst precursor SY-6 was filled in a reaction kettle, and 20.0 NL of hydrogen gas was introduced under a hermetic condition, the reaction temperature was controlled to be 230°C, the reaction was performed for 6.0 hours, the autoclave was cooled, the hydrogen in said autoclave was replaced with nitrogen gas, the prepared catalyst was denoted as Cat-6.

### Example 7

### Preparation of hydrogenation catalyst Cat-7:

30.0 g of molybdenum hexacarbonyl and 15.0 g of copper propionate were weighed, and mixed with 120g of xylene, a solution MQ-7 was prepared.

100.0 g of the S-2 was taken, impregnated with the solution MQ-7, the impregnated catalyst was subjected to a reduced pressure drying at a drying temperature of 120°C and a vacuum degree of 0.3 torr for a drying time of 5.0 hours, the obtained catalyst precursor was designated as P-7.

The catalyst precursor P-7 was placed in an autoclave, and added with 240.0g of acetic acid, the autoclave was sealed, nitrogen gas with a pressure of 0.3 MPa was then introduced, the autoclave was heated to 120°C, kept at the constant temperature for 24 hours, the catalyst was cooled and then subjected to reduced pressure drying at a drying temperature of 110°C and a vacuum degree of 0.2 torr for a drying time of 4.0 hours, the obtained catalyst precursor was designated as Y-7.

10 g of tert-nonyl tri-polysulfide and 80.0 g of tetrahydronaphthalene were prepared into a solution SQ-7. The catalyst precursor Y-7 was impregnated with the solution SQ-7, the catalyst was subjected to reduced pressure drying at a dry temperature of 100°C and a vacuum degree of 0.2 torr for a dry time of 4.0 hours, the produced catalyst precursor was designated as SY-7.

50.0 g of the catalyst precursor SY-7 was filled in a reaction kettle, and 35.0 NL of hydrogen gas was introduced under a hermetic condition, the reaction temperature was controlled to be 220°C, the reaction was performed for 4.0 hours, the autoclave was cooled, the hydrogen in said autoclave was replaced with nitrogen gas, the prepared catalyst was denoted as Cat-7.

### Example 8

### Preparation of hydrogenation catalyst Cat-8:

40.0 g of molybdenum hexacarbonyl and 20.0 g of copper lactate were weighed, and mixed with 120 g of ethylbenzene, a solution MQ-8 was prepared.

100.0 g of the S-2 was taken, impregnated with the solution MQ-8, the impregnated catalyst was subjected to a reduced pressure drying at a drying temperature of 120°C and a vacuum degree of 0.2 torr for a drying time of 6.0 hours, the obtained catalyst precursor was designated as P-8.

The catalyst precursor P-8 was placed in an autoclave, and added with 230.0 g of acetic hydride, the autoclave was sealed, nitrogen gas with a pressure of -0.4 MPa was then introduced, the autoclave was heated to 110°C, kept at the constant temperature for 30 hours, the catalyst was cooled and then subjected to reduced pressure drying at a drying temperature of 120°C and a vacuum degree of 0.2 torr for a drying time of 6.0 hours, the obtained catalyst precursor was designated as Y-8.

10 g of tert-dodecyl t tri-polysulfide and 80.0 g of decalin were prepared into a solution SQ-8. The catalyst precursor Y-8 was impregnated with the solution SQ-8, the catalyst was subjected to reduced pressure drying at a dry temperature of 110°C and a vacuum degree of 0.2 torr for a dry time of 6.0 hours, the produced catalyst precursor was designated as SY-8.

50.0 g of the catalyst precursor SY-8 was filled in a reaction kettle, and 25.0 NL of hydrogen gas was introduced under a hermetic condition, the reaction temperature was controlled to be 240°C, the reaction was performed for 3.0 hours, the autoclave was cooled, the hydrogen in said autoclave was replaced with nitrogen gas, the prepared catalyst was denoted as Cat-8.

### Comparative Example 1

### Preparation of comparative hydrogenation catalyst DCT-S1:

20.0 g of ammonium molybdate and 10.0 g of magnesium nitrate were weighed, 120 mL of an aqueous solution was prepared, which was denoted as DQ-1.

100.0 g of the S-1 was impregnated with the solution DQ-1, the impregnated catalyst was subjected to evaporation at a temperature of 120°C for 5.0 hours and calcination at a temperature of 500°C for 5.0 hours, the obtained catalyst was designated as DCT-1.

1,000.0 g of cyclohexane was taken, and mixed with 50.0 g of Dimethyl Disulfide (DMDS) to produce a vulcanization liquid, which was denoted as DSQ-1.

10.0 g of the catalyst DCT-1 was filled into a reaction tube, introduced hydrogen gas and the vulcanization liquid DSQ-1 for performing the vulcanization at a vulcanization temperature of 340°C for a vulcanization time of 8.0 hours, the hydrogen gas pressure was 5.0 MPa during the vulcanization process, the hydrogen gas flow rate was 150 ml/L, and the flow rate of said vulcanization liquid DSQ-1 was 20.0 ml/h. The vulcanized catalyst was designated as DCT-S1.

### Comparative Example 2

### Preparation of comparative hydrogenation catalyst DCT-S2:

20.0 g of ammonium molybdate and 12.0 g of nickel nitrate hexahydrate were weighed, 100 mL of an aqueous solution was prepared, which was denoted as DQ-2.

100.0g of the S-1 was impregnated with the solution DQ-2, the impregnated S-1 was subjected to evaporation at a temperature of 120°C for 5.0 hours and calcination at a temperature of 500°C for 5.0 hours, the obtained catalyst was designated as DCT-2.

1,000.0 g of cyclohexane was taken, and mixed with 50.0 g of DMDS to produce a vulcanization liquid, which was denoted as DSQ-2.

10.0 g of the catalyst DCT-2 was filled into a reaction tube, introduced hydrogen gas and the vulcanization liquid DSQ-2 for performing the vulcanization at a vulcanization temperature of 340°C for a vulcanization time of 8.0 hours, the hydrogen gas pressure was 5.0 MPa during the vulcanization process, the hydrogen gas flow rate was 150 ml/L, and the flow rate of said vulcanization liquid DSQ-1 was 20.0 ml/h. The vulcanized catalyst was designated as DCT-S2.

### Comparative Example 3

### Preparation of comparative hydrogenation catalyst DCT-S3:

The catalyst precursor P-2 and the sulfur-containing solution SQ-2 were prepared with the same method as that in Example 2.

The catalyst precursor P-2 was impregnated with the sulfur-containing solution SQ-2, the impregnated catalyst was subjected to a reduced pressure drying at a drying temperature of 100°C and a vacuum degree of 0.2 torr for a drying time of 4.0 hours, the obtained catalyst precursor was designated as DSP-3.

50.0 g of the catalyst precursor DSP-3 was loaded into a reaction kettle, 35.0 NL of hydrogen gas was then introduced under the hermetic condition, the reaction temperature was controlled to be 220°C, the reaction was performed for 4.0 hours, the reaction kettle was cooled, the hydrogen in said reaction kettle was replaced with nitrogen gas, the prepared catalyst was denoted as DCT-S3.

### Comparative Example 4

### Preparation of comparative hydrogenation catalyst DCT-S4:

30.0 g of ammonium molybdate and 25.0 g of zinc nitrate hexahydrate were weighed, 120 mL of an aqueous solution was prepared, which was denoted as DQ-4.

100.0 g of the S-2 was impregnated with the solution DQ-2, the impregnated S-2 was subjected to evaporation at a temperature of 120°C for 5.0 hours and calcination at a temperature of 500°C for 5.0 hours, the obtained catalyst was designated as DCT-4.

1,000.0 g of cyclohexane was taken, and mixed with 50.0 g of DMDS to produce a vulcanization liquid, which was denoted as DSQ-4.

10.0 g of the catalyst DCT-4 was filled into a reaction tube, introduced hydrogen gas and the vulcanization liquid DSQ-4 for performing the vulcanization at a vulcanization temperature of 340°C for a vulcanization time of 8.0 hours, the hydrogen gas pressure was 5.0 MPa during the vulcanization process, the hydrogen gas flow rate was 150 ml/L, and the flow rate of said vulcanization liquid DSQ-4 was 20.0 ml/h. The vulcanized catalyst was designated as DCT-S4.

### Comparative Example 5

### Preparation of comparative hydrogenation catalyst DCT-S5:

30.0 g of ammonium molybdate and 20.0 g of nickel nitrate hexahydrate were weighed, 100 mL of an aqueous solution was prepared, which was denoted as DQ-5.

100.0 g of the S-2 was impregnated with the solution DQ-5, the impregnated S-2 was subjected to evaporation at a temperature of 120°C for 5.0 hours and calcination at a temperature of 500°C for 5.0 hours, the obtained catalyst was designated as DCT-5.

1,000.0 g of cyclohexane was taken, and mixed with 50.0 g of DMDS to produce a vulcanization liquid, which was denoted as DSQ-5.

10.0 g of the catalyst DCT-5 was filled into a reaction tube, introduced hydrogen gas and the vulcanization liquid DSQ-5 for performing the vulcanization at a vulcanization temperature of 340°C for a vulcanization time of 8.0 hours, the hydrogen gas pressure was 5.0 MPa during the vulcanization process, the hydrogen gas flow rate was 150 ml/L, and the flow rate of said vulcanization liquid DSQ-5 was 20.0 ml/h. The vulcanized catalyst was designated as DCT-S5.

### Comparative Example 6

### Preparation of comparative hydrogenation catalyst DCT-S6:

The catalyst precursor P-5 and the sulfur-containing solution SQ-5 were prepared with the same method as that in Example 5.

The catalyst precursor P-5 was impregnated with the sulfur-containing solution SQ-5, the impregnated catalyst was subjected to a reduced pressure drying at a drying temperature of 110°C and a vacuum degree of 0.2 torr for a drying time of 6.0 hours, the obtained catalyst precursor was designated as DSP-5.

50.0 g of the catalyst precursor DSP-5 was loaded into a reaction kettle, 25.0 NL of hydrogen gas was then introduced under the hermetic condition, the reaction temperature was controlled to be 240°C, the reaction was performed for 3.0 hours, the reaction kettle was cooled, the hydrogen in said reaction kettle was replaced with nitrogen gas, the prepared catalyst was denoted as DCT-S6.

### Comparative Example 7

### Preparation of hydrogenation catalyst DCT-S7:

30.0 g of ammonium molybdate and 25.0 g of copper nitrate hexahydrate were weighed, 120 mL of an aqueous solution was prepared, which was denoted as DQ-7.

100.0g of the S-2 was impregnated with the solution DQ-7, the impregnated S-2 was subjected to evaporation at a temperature of 120°C for 5.0 hours and calcination at a temperature of 500°C for 5.0 hours, the obtained catalyst was designated as DCT-7.

1,000.0 g of cyclohexane was taken, and mixed with 50.0g of DMDS to produce a vulcanization liquid, which was denoted as DSQ-7.

10.0 g of the catalyst DCT-7 was filled into a reaction tube, introduced hydrogen gas and the vulcanization liquid DSQ-7 for performing the vulcanization at a vulcanization temperature of 340°C for a vulcanization time of 8.0 hours, the hydrogen gas pressure was 5.0 MPa during the vulcanization process, the hydrogen gas flow rate was 150 ml/L, and the flow rate of said vulcanization liquid DSQ-7 was 20.0 ml/h. The vulcanized catalyst was designated as DCT-S7.

10.0 g of DCT-7 was charged to the reactor tube and sulfided by hydrogen gas and DSQ-7, sulfided at a temperature of 340 °C, sulfided for a time of 8.0 hours, hydrogen gas pressure during sulfidation was 5.0 MPa, hydrogen gas flow rate was 150 ml/L and DSQ-7 flow rate was 20.0 ml/h. The catalyst after vulcanizing was designated DCT-S7.

**Table 1 Characterization results of catalysts obtained in examples and comparative examples**

| Catalyst No. | Mo /wt% | Divalent metal /wt% | S /wt% | Mass ratio of Mo/S |
|---|---|---|---|---|
| Cat-1 | 6.3 | 1.0 | 3.4 | 1.9 |
| Cat-2 | 9.2 | 1.1 | 4.7 | 1.9 |
| Cat-3 | 11.5 | 1.3 | 5.6 | 2.0 |
| Cat-4 | 9.0 | 3.8 | 4.5 | 2.0 |
| Cat-5 | 11.4 | 4.2 | 5.7 | 2.0 |
| Cat-6 | 13.6 | 4.1 | 6.8 | 2.0 |
| Cat-7 | 9.4 | 4.0 | 5.1 | 1.8 |
| Cat-8 | 11.1 | 4.2 | 5.9 | 1.9 |
| DCT-S1 | 9.0 | 1.1 | 7.6 | 1.2 |
| DCT- S2 | 8.9 | - | 6.5 | 1.4 |
| DCT-S3 | 9.1 | 1.0 | 5.8 | 1.6 |
| DCT-S4 | 12.1 | 4.0 | 8.8 | 1.4 |
| DCT-S5 | 12.3 | - | 8.9 | 1.4 |
| DCT-S6 | 11.2 | 4.1 | 7.0 | 1.6 |
| DCT-S7 | 12.3 | 4.2 | 9.1 | 1.3 |

**Table 2 Analysis results of the valence states of the catalysts obtained in examples and comparative examples**

| Catalyst No. | Content of 0 valence Mo /% | Content of +2 valence Mo /% | Content of +4 valence Mo /% |
|---|---|---|---|
| Cat-1 | 21.6 | 67.4 | 6.6 |
| Cat-2 | 19.7 | 62.3 | 8.0 |
| Cat-3 | 22.2 | 63.4 | 11.8 |
| Cat-4 | 20.1 | 57.6 | 18.3 |
| Cat-5 | 18.6 | 62.7 | 15.1 |
| Cat-6 | 20.5 | 62.9 | 10.8 |
| Cat-7 | 19.4 | 59.8 | 16.8 |
| Cat-8 | 21.1 | 60.2 | 15.7 |
| DCT-1 | <1 | 2.6 | 76.4 |
| DCT-2 | <1 | 1.9 | 75.5 |
| DCT-3 | 2.2 | 36.4 | 53.5 |
| DCT-4 | <1 | 1.3 | 79.4 |
| DCT-5 | <1 | 2.4 | 77.9 |
| DCT-6 | 5.9 | 36.7 | 55.0 |
| DCT-7 | <1 | 1.1 | 74.3 |

### Test examples and comparative test examples

The catalysts obtained in the above examples and comparative examples was filled in the grading manner (refer to Table 4), and the hydrogenation evaluation experiments were conducted using a fixed bed process, the properties of the ebullated bed apparatus hydrogenation oil product were shown in Table 3.

In the reactor, a hydrogenation protective agent (FZC-100B), a hydrodemetallization catalyst (FZC-204A), a hydrodecarbonization catalyst, and a hydrogenation decarbonization catalyst were sequentially filled along the material flow direction, and the four catalysts were filled in a volume ratio of 1: 2: 2: 3.

The operating conditions included: the reaction temperature of said hydrogenation protective agent and said hydrodemetallization catalyst was 360°C, a reaction temperature of the segment for removing residual carbon was 375°C, the denitrification segment had a reaction temperature of 395°C, a reaction pressure of 19.0 MPa, a hydrogen/oil volume ratio of 1,600: 1, and a liquid hourly space velocity of 0.15 h⁻¹. After 1,500 h of reaction and evaluations, the analysis was performed on the residual carbon value and nitrogen content in the distillation fraction with a temperature not less than 300°C in the hydrogenation product oil, the results were shown in Table 4.

**Table 3 Properties of hydrogenation product oil of the ebullated bed residual oil**

| Items | Numerical values | Items | Numerical values |
|---|---|---|---|
| Density/g·cm ⁻³ | 0.995 | Nitrogen content, µg/g | 3466 |
| Vanadium + nickel content, µg/g | 44.38 | H/C atomic ratio | 1.41 |
| Sulfur content, µg/g | 3707 | Conradson carbon residue, % | 17.1 |

**Table 4**

| No. | Hydrodecarbo nization catalyst | hydrogenation decarbonization catalyst | Nitrogen content, µg/g | Conradson carbon residue, % |
|---|---|---|---|---|
| Test Example 1 | Cat-1 | Cat-4 | 993 | 5.9 |
| Test Example 2 | Cat-2 | Cat-5 | 825 | 4.9 |
| Test Example 3 | Cat-3 | Cat-6 | 690 | 4.4 |
| Test Example 4 | Cat-2 | Cat-7 | 868 | 5.0 |
| Test Example 5 | Cat-3 | Cat-8 | 721 | 4.6 |
| Test Example 6 | Cat-3 | Cat-3 | 855 | 4.9 |
| Test Example 7 | Cat-6 | Cat-6 | 798 | 5.1 |
| Test Example 8 | Cat-2 | DCT-S6 | 1186 | 6.3 |
| Test Example 9 | DCT- S3 | Cat-5 | 1102 | 6.4 |
| Comparative Test Example 1 | DCT-S1 | DCT-S4 | 1453 | 8.1 |
| Comparative Test Example 2 | DCT-S2 | DCT-S5 | 1582 | 8.9 |
| Comparative Test Example 3 | DCT-S3 | DCT-S6 | 1209 | 6.8 |
| Comparative Test Example 4 | DCT-S2 | DCT-S7 | 1486 | 6.7 |

As can be seen from the evaluation results in Table 4, the method provided by the present invention has good hydrogenation decarbonization and hydrodecarbonization activity and desirable stability when deep processing low-sulfur ebullated bed residual oil hydrogenation product oil.

## Claims

1. A hydrogenation catalyst, is **characterized in that** the hydrogenation catalyst comprises a support and an active component, the active component comprises Mo and a divalent metal, and the divalent metal is at least one selected from the group consisting of Mg, Zn and Cu; based on the total weight of the hydrogenation catalyst, the content of Mo is within the range of 3-18%, the content of the divalent metal is within the range of 0.1-7%, and the mass ratio of Mo to S is 1.5 or more.

2. The catalyst according to claim 1, wherein the mass ratio of Mo to S is within the range of 1.5-3;
preferably, based on the total weight of the hydrogenation catalyst, the content of Mo is within the range of 5-16%, the content of said divalent metal is within the range of 0.2-4.5%, and the mass ratio of Mo to S is within the range of 1.6-2.4;
preferably, based on the total weight of the hydrogenation catalyst, the content of said support is within the range of 75-92%, and the total content of Mo, divalent metal and S is within the range of 8-25%.

3. The catalyst according to claim 1, wherein the hydrogenation catalyst is composed of the support, the active component and S element, wherein the active component comprises Mo and the divalent metal.

4. The catalyst according to any one of claims 1-3, wherein Mo comprises +2 valence Mo, 0 valence Mo, and +4 valence Mo in the catalyst tested by XPS;
preferably, +2 valence Mo is contained in an amount of 50-75%, 0 valence Mo is contained in an amount of 10-32%, +4 valence Mo is contained in an amount of 1-25%, based on the total amount of Mo calculated in terms of atoms;
further preferably, +2 valence Mo is contained in an amount of 50-70%, 0 valence Mo is contained in an amount of 15-29%, +4 valence Mo is contained in an amount of 4-25%, based on the total amount of Mo calculated in terms of atoms.

5. The catalyst according to any one of claims 1-4, wherein the total content of +2 valence Mo, 0 valence Mo and +4 valence Mo in the total amount of Mo calculated in terms of atoms in the catalyst tested by XPS is more than 90%, preferably within the range of 90-99%.

6. The catalyst according to any one of claims 1-5, wherein the support is at least one selected from the group consisting of alumina, silica, titania, zirconia, and amorphous silica-alumina.

7. A method for preparing a hydrogenation catalyst, the method comprises the following steps:
(1) introducing molybdenum hexacarbonyl and an organic divalent metal compound into a support through an impregnation method to obtain a catalyst precursor I, wherein the divalent metal is at least one selected from the group consisting of Mg, Zn and Cu;
(2) contacting a dispersant with the catalyst precursor I in the presence of an inert gas to obtain a catalyst precursor II;
the method may further comprise step (3-1) or step (3-2), wherein,
step (3-1) comprises: vulcanizing the catalyst precursor II, the vulcanizing process causes that the hydrogenation catalyst has a mass ratio of Mo to S being 1.5 or more, preferably within the range of 1.5-3;
step (3-2) comprises: impregnating the catalyst precursor II with an impregnation liquid containing a polysulfide, and then subjecting to drying.

8. The method according to claim 7, wherein step (1) comprises: impregnating the support with an impregnation liquid containing molybdenum hexacarbonyl and an organic divalent metal compound, and then subjecting to drying;
preferably, the impregnation method includes an equal volume impregnation process or an excessive impregnation process;
and/or, the drying is vacuum drying at reduced pressure, preferably, the drying conditions comprises: a drying temperature of 60-120°C, more preferably 80-100°C; a drying vacuum degree of 0.1-2 torr, more preferably 0.2-1 torr; and a drying time of 1-10 hours, more preferably 2-8 hours.

9. The method according to claim 8, wherein the solvent in the impregnation liquid is at least one selected from the group consisting of ethanol, benzene, toluene, xylene, ethylbenzene and tetrahydronaphthalene;
preferably, the concentration of molybdenum hexacarbonyl in the impregnation liquid is within the range of 0.2-3.5 mol/L, more preferably within the range of 0.3-2 mol/L; preferably, the concentration of said organic divalent metal compound in the impregnation liquid is within the range of 0.02-0.9 mol/L.

10. The method according to any one of claims 7-9, wherein the organic divalent metal compound comprises at least one of an organomagnesium compound, an organozinc compound, and an organocopper compound;
preferably, the organomagnesium compound is at least one selected from the group consisting of magnesium citrate, magnesium glycinate, magnesium gluconate, magnesium salicylate and magnesium laurate;
preferably, the organozinc compound is at least one selected from the group consisting of zinc propionate, zinc octoate, zinc lactate and zinc fumarate;
preferably, the organocopper compound is at least one selected from the group consisting of copper propionate, copper naphthenate, copper citrate, copper acetylacetonate and copper lactate;
preferably, the support is at least one selected from the group consisting of alumina, silica, titania, zirconia and amorphous silica-alumina.

11. The method according to any one of claims 7-10, wherein the support, molybdenum hexacarbonyl and organic divalent metal compound are used in an amount such that in the prepared hydrogenation catalyst, the content of Mo is within the range of 3-18%, preferably within the range of 5-16%, the content of said divalent metal is within the range of 0.1-7%, preferably within the range of 0.2-4.5%, based on the total weight of said hydrogenation catalyst.

12. The method according to any one of claims 7-11, wherein the dosage of said dispersant in step (2) is 1-10 g, preferably 2-5 g, relative to 1 g of the catalyst precursor I;
preferably, the dispersant is at least one selected from the group consisting of acetic acid, acetic anhydride, citric acid, dimethyl malonate, malonic acid and succinic acid; further preferably, the dispersant is acetic acid and/or acetic anhydride;
preferably, the contacting conditions in step (2) comprise: a pressure of 0-1 MPa, preferably 0.1-0.5 MPa, a temperature of 80-180°C, preferably 100-150°C, and a time of 8-36 hours, preferably 12-24 hours;
preferably, the method further comprises: after the contacting in step (2), removing the remaining dispersant by evaporative drying, more preferably by vacuum drying at reduced pressure; preferably, the evaporative drying conditions comprise: a drying temperature of 80-150°C, more preferably 100-120°C, a drying vacuum degree of 0.1-2 torr, more preferably 0.2-1 torr, and a drying time of 1-8 hours, more preferably 2-6 hours.

13. The method according to any one of claims 7-12, wherein the polysulfide in step (3-2) is at least one selected from the group consisting of di-tert-butyl polysulfide, tert-nonyl polysulfide, tert-dodecyl polysulfide, and di-hexyl disulfide;
preferably, the solvent in the impregnation liquid containing polysulfide is at least one selected from the group consisting of cyclohexane, n-heptane, n-octane, tetrahydronaphthalene, decalin, toluene and xylene;
preferably, the mass concentration of the impregnation liquid containing polysulfide is within the range of 2-20%, more preferably within the range of 3-15%;
preferably, the impregnation liquid containing the polysulfide and the catalyst precursor II are used in such an amount that in the prepared hydrogenation catalyst, the mass ratio of Mo to S is 1.5 or more, preferably within the range of 1.5-3.

14. The method according to any one of claims 7-13, wherein step (3-2) further comprises performing a hydrogen gas treatment on the dried material;
preferably, said hydrogen gas treatment is performed under a hydrogen gas atmosphere provided by a hydrogen-containing gas, the hydrogen content in said hydrogen-containing gas is preferably not less than 50vol%, more preferably within the range of 50-100vol%;
preferably, the hydrogen gas treatment conditions comprise: the dosage of hydrogen gas is within the range of 0.1-1 NL, more preferably within the range of 0.2-0.8 NL, relative to 1g of the dried material; the hydrogen treatment temperature is within the range of 180-300°C, more preferably within the range of 200-260°C; the treatment time is within the range of 2-10 hours, more preferably within the range of 3-6 hours, further preferably, the hydrogen gas treatment is carried out under the hermetic condition.

15. The hydrogenation catalyst prepared with the method according to any one of claims 7-14.

16. Use of the hydrogenation catalyst according to any one of claims 1-6 and 15 in an oil product hydrotreating.

17. An oil product hydrotreating method comprising: contacting an oil product with the hydrogenation catalyst according to any one of claims 1-6 and 15 and carrying out the reaction under the hydrotreating conditions;
preferably, the hydrotreating conditions comprise: a reaction hydrogen pressure within the range of 4-25 MPa, more preferably within the range of 12-25 MPa, a hydrogen/oil volume ratio of (200-2,500): 1, more preferably (500-2,000): 1, a volume hourly space velocity within the range of 0.1-3 h⁻¹, more preferably within the range of 0.1-0.5 h⁻¹, a reaction temperature within the range of 280-480°C, more preferably within the range of 300-450°C;
preferably, the oil product has a mass content of sulfur within the range of 0-5,000 ppm, and a nitrogen/sulfur mass ratio within the range of 0.5-2;
preferably, the oil product is at least one selected from the group consisting of ebullated bed hydrogenation tail oil, low-sulfur coal tar, and low-sulfur Fischer-Tropsch synthesis oil, more preferably ebullated bed hydrogenation tail oil;
preferably, the properties of the ebullated bed hydrogenation tail oil comprise: a density of 0.95-1.05 g/cm³, a mass content of sulfur being 8,000 ppm or less, more preferably within the range of 1,500-7,000 ppm, a mass content of nitrogen within the range of 500-5,000ppm, and a mass content of residual carbon within the range of 8-25%.

18. The method according to claim 17, wherein the method comprises: contacting an ebullated bed hydrogenation tail gas with at least one hydrodecarbonization catalyst and at least one hydrogenation decarbonization catalyst and carrying out the reaction under the hydrotreating conditions, wherein the hydrodecarbonization catalyst and the hydrogenation decarbonization catalyst are each independently a hydrogenation catalyst according to any one of claims 1-6 and 15, wherein the divalent metal in said hydrodecarbonization catalyst is Mg, and the divalent metal in said hydrogenation decarbonization catalyst is Cu and/or Zn;
preferably, based on the total weight of said hydrodecarbonization catalyst, the content of Mo in the hydrodecarbonization catalyst is within the range of 5-15%, the content of Mg is within the range of 0.2-1.5%, more preferably within the range of 0.5-1.5%; the mass ratio of Mo to S is within the range of 1.5-3; based on the total weight of said hydrogenation decarbonization catalyst, the content of Mo in the hydrogenation decarbonization catalyst is within the range of 6-16%, the content of Cu and/or Zn is within the range of 0.5-4.5%; the mass ratio of Mo to S is within the range of 1.5-3.

19. The method according to claim 18, wherein the method uses a fixed bed hydrogenation process, the hydrodecarbonization catalyst is disposed upstream the hydrogenation decarbonization catalyst in the flow direction of materials;
preferably, the ratio of the filling volume of said hydrodecarbonization catalyst to the filling volume of said hydrogenation decarbonization catalyst is 1: (0.3-3).

20. The method according to claim 19, wherein the hydrodecarbonization reaction conditions comprise: a reaction temperature of 300-420°C, a reaction pressure of 12-25 MPa, a hydrogen/oil volume ratio of (500-2,000): 1, and a liquid hourly volumetric space velocity within the range of 0.1-0.5 h⁻¹;
and/or the hydrogenation decarbonization reaction conditions comprise: a reaction temperature of 300-450°C, a reaction pressure of 12-25 MPa, a hydrogen/oil volume ratio of (500-2,000): 1, and a liquid hourly volumetric space velocity within the range of 0.1-0.5 h⁻¹.
